# EUROPEAN PATENT APPLICATION

(11) **EP 1 734 465 A1**
(43) Date of publication of application: **20.12.2006**
(21) Application number: 05012916.2
(22) Date of filing: 15.06.2005
(51) Int. Cl.: G06Q 10/00

(54) **Method and system for the management of an address book of an electronic mailbox**

(71) Applicant: Chao-Hung WU, Hsintien City, Tapei (TW)
(72) Inventor: Chao-Hung WU, Hsintien City, Tapei (TW)
(74) Representative: Viering, Jentschura & Partner

(57) **Abstract**

An electronic mailbox address book management system and a method for the same are proposed. The address book management system has a mailing list database, a multimedia recording module and an editing module. The mailing list database stores a plurality of mailing lists. The multimedia recording module makes files in multimedia formats. The editing module is used to edit the mailing lists stored in the mailing list database. In the address book management method, the editing module edits the mailing lists with text messages, and the multimedia recording module makes files in multimedia formats into the mailing lists.

## Description

### BACKGROUND OF THE INVENTION

### 1. Field of the invention

The present invention relates to an address book management system and a method for the same and, more particularly, to an address book management system and a method for the same in electronic mail.

### 2. Description of Related Art

Along with the development of the Internet, transmission of network information is substantially replacing transmission of conventional written documents. Among the transmission techniques of network information, E-mail is the most popular, and is widely used by various companies, families and individuals. The reason why E-mail is much appreciated is that it can provide convenient, quick and borderless communication. The contents can include multimedia information and can be transmitted to a large number of receivers. These advantages make E-mail an indispensable transmission medium in the information era.

For address books used in existent electronic mailboxes such as Outlook Express of the Microsoft Inc., relevant data of a mailing list such as name, E-mail address, telephone number, mobile phone number, address, web page and so on are recorded in text form. Although a text-form record can sufficiently depict the relevant data of a person in the mailing list, it cannot show his appearance. When the mailing lists of the address book becomes bigger and bigger, it is especially hard for the user to associate a face with a name when reviewing a mailing list with only the text messages recorded in this mailing list.

Japan Pat. No. JP10171827 discloses a technique capable of automatically updating an address book, in which a user needs not to manually update data of the address book. The contents of mailing lists stored in the address book, however, are still mainly text messages. There is no audio/video data combined therein. Because audio/video data provide more lively and relevant information of a mailing list than text data, if a person of the mailing list can be associated with audio/video data, it will be very helpful to the user for the management of the address book.

### SUMMARY OF THE INVENTION

An object of the present invention is to provide an electronic mailbox address book management system and the method for the same, in which audio/video data are combined in the mailing lists recorded in the address book. A user can thus more conveniently discriminate persons in the mailing lists through the audio/video data.

To achieve the above object, the present invention provide an electronic mailbox address book management system, which comprises a mailing list database for storing a plurality of mailing lists, a multimedia recording module for making files in multimedia formats, and an editing module for editing the mailing lists stored in the mailing list database. The editing module edits the mailing lists with text messages. The multimedia recording module makes files in multimedia formats into the mailing lists.

To achieve the above object, the present invention also provides an electronic mailbox address book management method, which comprises the steps of: selectively inputting a sender, determining whether the sender is in a mailing list database for storing a plurality of mailing lists; and using an editing module to open a corresponding mailing list in the mailing list database for editing if the sender is in the mailing list database, or using the editing module to add a mailing list in the mailing list database and then editing the added mailing list if the sender is not in the mailing list database. The editing module edits the mailing lists with text messages. The multimedia recording module makes files in multimedia formats into the mailing lists.

The present invention provides an electronic mailbox address book management system and the method for the same to record audio/video data in the mailing lists so as to truly show persons represented by the mailing lists. A user can more easily manage the address book in the electronic mailbox.

### BRIEF DESCRIPTION OF THE DRAWINGS

The various objects and advantages of the present invention will be more readily understood from the following detailed description when read in conjunction with the appended drawing, in which:
Fig. 1 is a system architecture diagram according to a preferred embodiment of the present invention;
Fig. 2 is a diagram showing a mailing list of the present invention;
Fig. 3 is a flowchart according to a preferred embodiment of the present invention; and
Fig. 4 is a flowchart according to another preferred embodiment of the present invention.

### DETAILED DESCRIPTION OF THE PREFERRED EMBODIMENTS

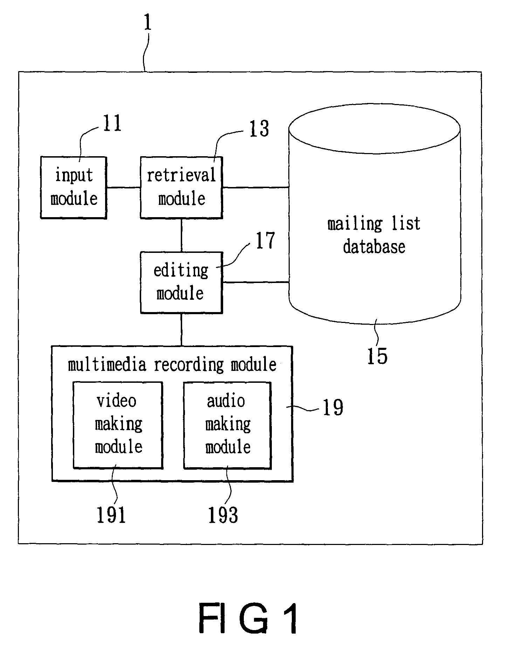

As shown in Fig. 1, an electronic mailbox address book management system 1 of the present invention allows a user to make address data of E-mail with audio/video files. In this embodiment, the address data means mailing lists stored in an address book. In addition to combining text messages of the conventional address book, the present invention is characterized in that audio/video data can also be recorded in the mailing lists.

As shown in Fig. 1, the address book management system 1 comprises an input module 11, a retrieval module 13, a mailing list database 15, an editing module 17 and a multimedia recording module 19. The input module 11 can be used to select a sender in an E-mail to input directly the sender data. The retrieval module 13 is used to find out a corresponding mailing list in the mailing list database 15 based on the sender data input by the input module 11. The mailing list database 15 stores data of a plurality of mailing lists. In this embodiment, the mailing lists can store text messages and audio/video messages. The editing module 17 can be used to edit data in the mailing list database 15 and text messages or audio/video messages of the mailing lists. The multimedia recording module 19 makes files in multimedia formats during the process when the editing module 15 edits the mailing lists, and combines the made files in multimedia formats in the mailing lists.

In this embodiment, the editing module 17 can be used to edit the text content of the mailing lists with text messages, and the multimedia recording module 19 can be used to make files in multimedia formats into the mailing lists. In this embodiment, the files in multimedia formats are attached to the mailing lists to be directly selected for playback in the mailing lists. If the mailing list to be edited is input by selecting a sender in an E-mail by the input module 11, the retrieval module 13 will compare the sender and the mailing lists stored in the mailing list database 15. If a corresponding mailing list matching the sender is found, the retrieval module 13 will send this mailing list to the editing module 17 for editing. If the retrieval module 13 finds no mailing list matching the sender, the editing module 17 will add a new mailing list for editing. After the editing module 17 finishes editing the mailing list, the mailing list is stored into the mailing list database 16.

In this embodiment, the multimedia recording module 19 comprises a video making module 191 and an audio making module 193. The video making module 191 makes video files through a video capture device (e.g., a video camcorder). The audio making module 193 makes audio files through an audio capture device (e.g., a microphone). The multimedia recording module 19 can make audio/video files having both video and audio data according to the requirement of the editing module 17. The multimedia recording module 19 can also be used to make audio-only or video-only files. In this embodiment, the multimedia recording module 19 is used to record related audio/video data of a subject represented by the mailing list.

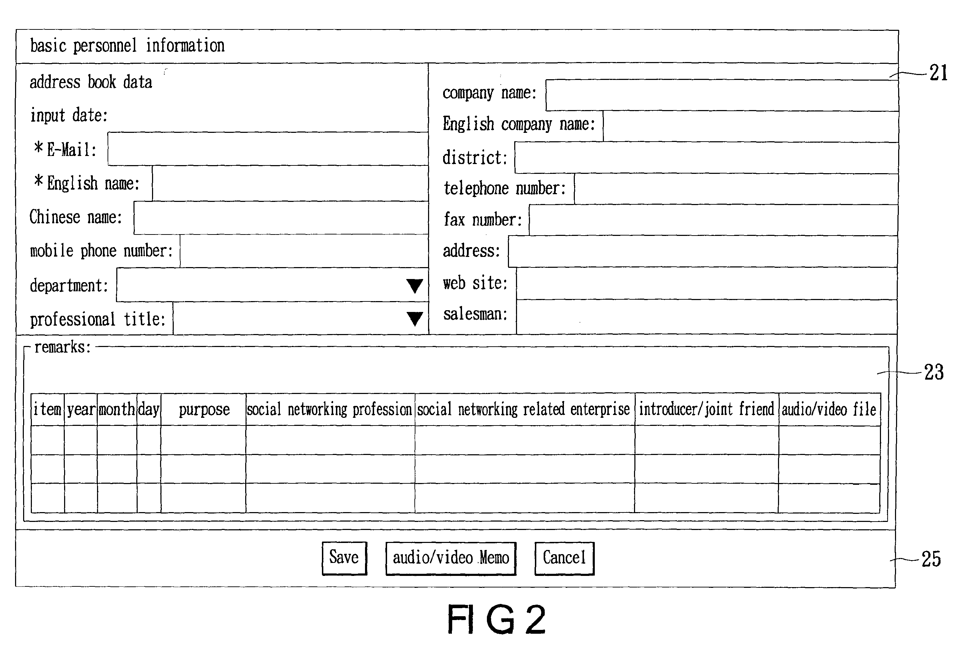

Fig. 2 is a diagram showing a mailing list of the present invention. In this embodiment, the mailing list includes a text data area 21, a multimedia file area 23, and a multimedia making area 25. The text data area 21 can record text messages such as, for example, input date, E-mail address, English name, Chinese name, mobile phone number, department, professional title, company name, English company name, district, telephone number, fax number, address, web site, and salesman. Other text messages can also be recorded. The multimedia file area 23 is used to store files in multimedia formats made by the multimedia recording module 19. The multimedia file area 23 can store several files, each including important text messages such as, for example, item, year, month, day, purpose, social networking profession, social networking related enterprise, introducer/joint friend, and audio/video files. After finishing making and saving audio/video files, the recorded content of each file can be quickly looked up. The recorded content of each file can be looked up by inputting an important text such as, for example, the purpose, the social networking profession, the social networking related enterprise, and the introducer/joint friend. The multimedia making area 25 provides function options such as Save, audio/video Memo, and Cancel. The audio/video Memo function option can be used to make an audio/video file. The Save function option can be used to store the made audio/video file in the multimedia file area 23.

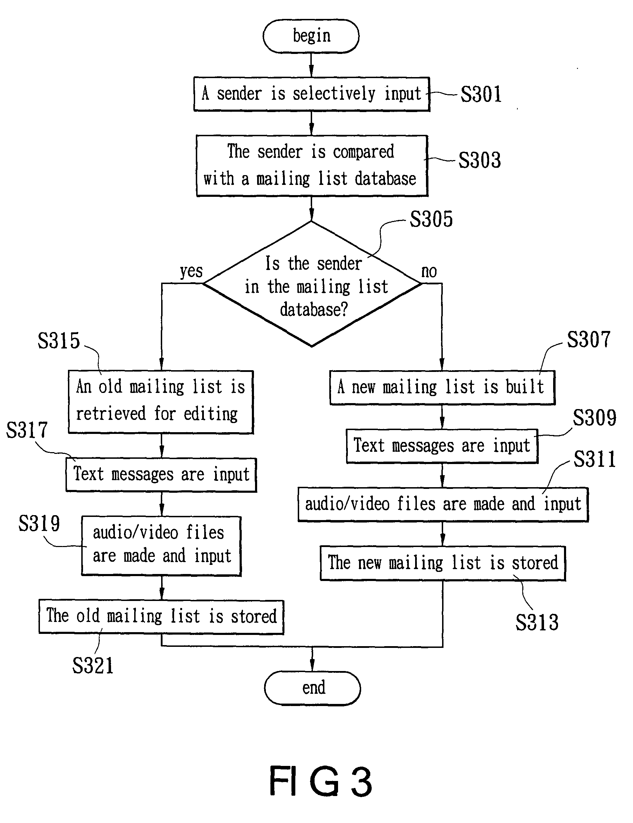

Fig. 3 is a flowchart according to a preferred embodiment of the present invention. A user can use the input module 11 to select a sender data of an E-mail in an electronic mailbox (Step S301). The retrieval module 13 is used to compare the sender with mailing lists in a mailing list database 15 based on the selected sender data input by the input module 11 (Step S303). The comparison is accomplished by comparing the sender with E-mail account of the mailing lists. Whether the sender has been recorded in the mailing list database 15 is then determined according to the comparison result (Step S305). If the answer is no, Step S307 is performed; otherwise, Step S315 is performed.

In Step S307, a new mailing list is built according to the selected sender data input by the input module 11 (Step S307). Next, text messages are input into this new mailing list (Step S309). The input text messages are in the text data area 21 shown in Fig. 2. audio/video files are then made and input (Step S311). The making of audio/video files is in the multimedia file area 23 shown in Fig. 2. After editing is finished, this new mailing list is stored into the mailing list database 15 (Step S313).

In Step S315, an old mailing list in the mailing list database 15 corresponding to the sender is retrieved for editing (Step S315). Next, text messages are input into this old mailing list (Step S317). The input text messages are in the text data area 21 shown in Fig. 2. Audio/video files are then made and input (Step S319). The making of audio/video files is in the multimedia file area 23 shown in Fig. 2. After finishing editing, this old mailing list is stored into the mailing list database 15 (Step S321).

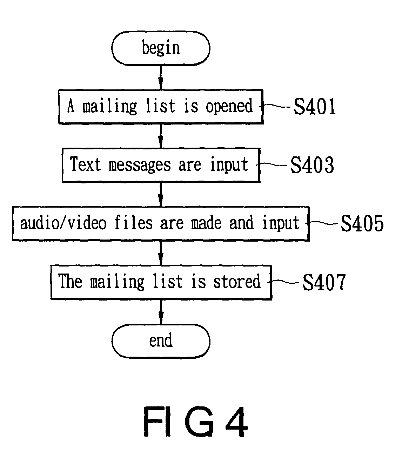

Fig. 4 is a flowchart according to another preferred embodiment of the present invention. A user can directly open a mailing list for editing (Step S401). Next, text messages are input into this mailing list (Step S403). The input text messages are in the text data area 21 shown in Fig. 2. Audio/video files are then made and input (Step S405). The making of audio/video files is in the multimedia file area 23 shown in Fig. 2. After finishing editing, this mailing list is stored into the mailing list database 15 (Step S407). In Step S401, a mailing list already existing in the mailing list database 15 can be opened, or a new mailing list not yet stored in the mailing list database 15 can be opened. In this embodiment, the user can edit data of the mailing lists stored in the mailing list database 15 at any time. The edited data of the mailing lists can be data of the text data area 21 or data of the multimedia file area 23.

To sum up, the present invention provides an electronic mailbox address book management system and a method for the same, in which related data can be recorded in audio/video format in a mailing list (e.g., the appearance of the subject represented by the mailing list). The user can thus be prompted by the audio/video data to remember the subject represented by the mailing list. Moreover, related information of the subject represented by the mailing list can also be noted with audio/video data.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

### Reference Numerals

### [Present invention]

- 1: address book management system
- 11: input module
- 13: retrieval module
- 15: mailing list database
- 17: editing module
- 19: multimedia recording module
- 191: video making module
- 193: audio making module
- 21: text data area
- 23: multimedia file area
- 25: multimedia making area

## Claims

1. An electronic mailbox address book management system, comprising:
a mailing list database for storing data of a plurality of mailing lists;
a multimedia recording module for making files in multimedia formats; and
an editing module for editing said mailing lists stored in said mailing list database;
whereby said editing module edits said mailing lists with text messages, and said multimedia recording module makes files in multimedia formats into said mailing lists.

2. The electronic mailbox address book management system as claimed in claim 1, wherein a format of said mailing lists comprises:
a text data area for storing text data;
a multimedia file area for storing multimedia files; and
a multimedia making area for function selections of making multimedia.

3. The electronic mailbox address book management system as claimed in claim 1, wherein said multimedia recording module is a video making module.

4. The electronic mailbox address book management system as claimed in claim 1, wherein said multimedia recording module is an audio making module.

5. The electronic mailbox address book management system as claimed in claim 1, wherein said multimedia recording module comprises a video making module and an audio making module.

6. An electronic mailbox address book management system, comprising:
a mailing list database for storing data of a plurality of mailing lists;
a multimedia recording module for making files in multimedia formats;
an input module for selectively inputting a sender;
a retrieval module for determining whether said sender is in said mailing lists in said mailing list database; and
an editing module for editing said mailing lists stored in said mailing list database based on a retrieval result, said editing module editing a mailing list corresponding to said sender if said sender is in said mailing list database, or said editing module adding a newly added mailing list corresponding to said sender into said mailing list database if said sender is not in said mailing list database;
whereby said editing module edits said mailing lists with text messages, and said multimedia recording module makes files in multimedia formats into said mailing lists.

7. The electronic mailbox address book management system as claimed in claim 6, wherein a format of said mailing lists comprises:
a text data area for storing text data;
a multimedia file area for storing multimedia files; and
a multimedia making area for function selections of making multimedia.

8. The electronic mailbox address book management system as claimed in claim 6, wherein said multimedia recording module is a video making module.

9. The electronic mailbox address book management system as claimed in claim 6, wherein said multimedia recording module is an audio making module.

10. The electronic mailbox address book management system as claimed in claim 6, wherein said multimedia recording module comprises a video making module and an audio making module.

11. An electronic mailbox address book management method, comprising the steps of:
selectively inputting a sender;
determining whether said sender is in a mailing list database for storing data of a plurality of mailing lists; and
using an editing module to open a mailing list in said mailing list database corresponding to said sender for editing if said sender is in said mailing list database, or using said editing module to add a mailing list in said mailing list database and then editing the added mailing list if said sender is not in said mailing list database;
whereby said editing module edits said mailing lists with text messages, and said multimedia recording module makes files in multimedia formats into said mailing lists.

12. The electronic mailbox address book management method as claimed in claim 11, wherein the format of said mailing lists comprises:
a text data area for storing text data;
a multimedia file area for storing multimedia files; and
a multimedia making area for function selections of making multimedia.

13. The electronic mailbox address book management method as claimed in claim 11, wherein files in multimedia formats made by said multimedia recording module are audio files.

14. The electronic mailbox address book management method as claimed in claim 11, wherein files in multimedia formats made by said multimedia recording module are video files.

15. The electronic mailbox address book management method as claimed in claim 11, wherein files in multimedia formats made by said multimedia recording module are audio/video files.

16. An electronic mailbox address book management method, comprising the steps of:
opening a mailing list; and
using an editing module to edit said mailing list;
whereby said editing module edits said mailing list with text messages, and a multimedia recording module makes files in multimedia formats into said mailing list.

17. The electronic mailbox address book management method as claimed in claim 16, wherein a format of said mailing lists comprises:
a text data area for storing text data;
a multimedia file area for storing multimedia files; and
a multimedia making area for function selections of making multimedia.

18. The electronic mailbox address book management method as claimed in claim 16, wherein said opened mailing list is already stored in a mailing list database.

19. The electronic mailbox address book management method as claimed in claim 16, wherein said opened mailing list is not stored in a mailing list database yet, but is added to said mailing list database.

20. The electronic mailbox address book management method as claimed in claim 16, wherein files in multimedia formats made by said multimedia recording module are audio files.

21. The electronic mailbox address book management method as claimed in claim 16, wherein files in multimedia formats made by said multimedia recording module are video files.

22. The electronic mailbox address book management method as claimed in claim 16, wherein files in multimedia formats made by said multimedia recording module are audio/video files.
